# EUROPEAN PATENT APPLICATION

(11) **EP 4 693 725 A1**
(43) Date of publication of application: **11.02.2026**
(21) Application number: 24216856.5
(22) Date of filing: 02.12.2024
(51) Int. Cl.: H01P 1/02, H01P 5/107, H01Q 1/32

(54) **HALF-MODE WAVEGUIDE HAVING AN ASYMMETRIC STRUCTURE FOR A RADAR SYSTEM**

(30) Priority: 08.08.2024 US 202418797703
(71) Applicant: Aptiv Technologies AG, 8200 Schaffhausen (CH)
(72) Inventor: Kong, Soon-cheol, Oxnard, CA, 93036 (US); Shi, Shawn, Thousand Oaks, CA, 91320 (US)
(74) Representative: Manitz Finsterwald Patent- und Rechtsanwaltspartnerschaft mbB

(57) **Abstract**

A half-mode waveguide, in accordance with a non-limiting example, includes a body having a base wall, a top wall, a first side wall, and a second side wall. The body has a height defined between the base wall and the top wall. A signal channel extends through the body from the first side wall to the second side wall. The signal channel includes a first side wall portion, a second side wall portion, and a base wall portion. The first side wall portion has a first height, and the second side wall portion has a second height that is greater than the first height of the first side wall portion.

## Description

### FIELD

The present disclosure relates to the art of radar systems and, more particularly, to a radar system including a half-mode waveguide having an asymmetric structure.

### BACKGROUND

This section provides background information related to the present disclosure which is not necessarily prior art.

Automotive radar sensors are used in vehicle sensing systems to determine information about objects in the environment of the vehicle, such as the location, size, orientation, velocity, and acceleration of objects in the environment of the vehicle. The sensed information can, for example, be used by other vehicle systems, such as autonomous driving systems and/or advanced driver assistance systems (ADAS), etc., to control steering, braking, throttle, and/or other vehicle systems.

Some prior automotive radar systems use printed circuit board (PCB) antennas wherein the radar system includes a control PCB that includes processing components for the radar system, such as one or more microprocessors, one or more power supplies, other integrated circuits (ICs) such as monolithic microwave integrated circuits (MMIC), etc., as well as an additional antenna PCB attached to the control PCB and connected to the MMIC. The additional antenna PCB is made of high-performance radio frequency (RF) material and includes antenna components that function as the antenna for the radar system. The PCB antenna radiators, for example, can be implemented using microstrip patches, microstrip stubs, microstrip meander lines, planar microstrip antennas/probes and the like. The antenna PCB can be attached to the control PCB using adhesive.

Typically, a waveguide is positioned over a planar microstrip probe. The waveguide collects and guides RF energy from the probe. The RF energy is then directed from the radar system. In a half-mode waveguide, the RF energy is passed through a duct to a half-mode wave guide. The duct directs the RF energy from the antenna to the half-mode waveguide where it may then pass to a radar control module. The half-mode wave guide forms a 90° bend of the RF signal.

To promote a more efficient bending of the RF energy both the duct and the half-mode waveguide include open surfaces. While the open surfaces reduce trapped modes and promote more efficient propagation of the RF signal around the 90° bend, they also contribute to insertion losses of the RF signal. Reducing insertion losses will contribute to a stronger signal reaching the target which, in turn, will lead to a stronger reflection thereby enhancing radar effectiveness. Accordingly, the industry would welcome changes in half-mode wave guide design that would reduce insertion losses.

### SUMMARY

This section provides a general summary of the disclosure and is not a comprehensive disclosure of its full scope or all of its features.

A half-mode waveguide, in accordance with a non-limiting example, includes a body having a base wall, a top wall, a first side wall, and a second side wall. The body has a height defined between the base wall and the top wall. A signal channel extends through the body from the first side wall to the second side wall. The signal channel includes a first side wall portion, a second side wall portion, and a base wall portion. The first side wall portion has a first height, and the second side wall portion has a second height that is greater than the first height of the first side wall portion.

In other features, the top wall extends at a non-zero angle relative to the base wall.

In other features, the non-zero angle is between about 20° and about 50°.

In other features, the non-zero angle is between about 25° and about 45°.

In other features, the non-zero angle is between about 35° and about 45°.

In other features, the top wall includes a first chamfered edge extending along the first side wall and a second chamfered edge extending along the second side wall.

In other features, the signal channel includes a first substantially linear portion extending from the first side wall and a second substantially linear portion extending from the second side wall, the first substantially linear portion joining with the second substantially linear portion at a non-zero angle.

In other features, the signal channel extends along a curvilinear path between the first side wall and the second side wall.

In other features, the top wall includes a step at the signal channel, the step defining the second side wall portion.

In other features, the body is formed as a monolithic structure.

An automotive radar system includes a printed circuit board (PCB) formed from a plurality of layers. The PCB includes a first surface and a second surface that is opposite the first surface. A monolithic microwave integrated circuit (MMIC) is mounted to the first surface. A radar control module is mounted to the second surface of the PCB. A half-mode waveguide system extends along the second surface of the PCB connecting the MMIC to the radar control module. The half-mode waveguide system includes a half-mode waveguide including a body having a base wall, a top wall, a first side wall, and a second side wall. The body having a height defined between the base wall and the top wall. A signal channel extends from an inlet defined at the first side wall through the body to an outlet defined at the second side wall. The signal channel includes a first side wall portion, a second side wall portion, and a base wall portion. The first side wall portion has a first height, and the second side wall portion has a second height that is greater than the first height of the first side wall portion.

In other features, the top wall extends at a non-zero angle relative to the base wall.

In other features, the non-zero angle is between about 20° and about 50°.

In other features, the non-zero angle is between about 35° and about 45°.

In other features, the top wall includes a first chamfered edge extending along the first side wall and a second chamfered edge extending along the second side wall.

In other features, the signal channel includes a first substantially linear portion extending from the first side wall and a second substantially linear portion extending from the second side wall, the first substantially linear portion joining with the second substantially linear portion at a non-zero angle.

In other features, the signal channel extends along a curvilinear path between the first side wall and the second side wall.

In other features, the top wall includes a step at the signal channel, the step defining the second side wall portion.

In other features, the body is formed as a monolithic structure.

In other features, the half-mode waveguide defines a 90° bend in the half-mode waveguide system.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations and are not intended to limit the scope of the present disclosure.
FIG. 1 is an upper right perspective view of a radar system including a half-mode waveguide having an asymmetric structure, in accordance with the present disclosure;
FIG. 2 is a side view of the radar system of FIG. 1, in accordance with the present disclosure;
FIG. 3 is a perspective view of a half-mode waveguide having an asymmetric structure, in accordance with the present disclosure;
FIG 4 is a top view of the half-mode waveguide of FIG. 3, in accordance with the present disclosure;
FIG. 5 is a perspective view of a half-mode waveguide having an asymmetric structure, in accordance with another aspect of the present disclosure;
FIG. 6 is a top view of the half-mode waveguide of FIG. 5, in accordance with the present disclosure;
FIG. 7 is a perspective view of a half-mode waveguide having an asymmetric structure, in accordance with yet another aspect of the present disclosure;
FIG. 8 is a top view of the half-mode waveguide of FIG. 7, in accordance with the present disclosure;
FIG. 9 is a perspective view of a half-mode waveguide having an asymmetric structure, in accordance with yet another aspect of the present disclosure; and
FIG. 10 is a side view of the half-mode waveguide of FIG. 9, in accordance with the present disclosure.

Corresponding reference numerals indicate corresponding parts throughout the several views of the drawings.

### DETAILED DESCRIPTION

Example embodiments will now be described more fully with reference to the accompanying drawings.

While radar systems formed according to the present disclosure are described in the context of vehicles, the radar systems can be used in stationary applications and/or other applications.

Radar systems direct RF energy from a source towards a target. RF energy reflected from the target is received and processed to determine a wide variety of information. The information can include target location, target distance, target speed, and the like. In the source, the RF energy travels through an interconnect path from the MMIC to the waveguide. The RF energy leaves the MMIC and transitions to traces in the PCB. The RF energy then travels along the traces from the MMIC toward the waveguide/antenna. Once again, the RF undergoes a transition, this time from the traces to the waveguide/antenna. The RF energy then travels through the waveguide towards a target. Energy losses develop along the interconnect path. Energy losses at the transitions are greater than the energy losses in the traces. Reducing energy losses will increase radar efficiency and sensitivity.

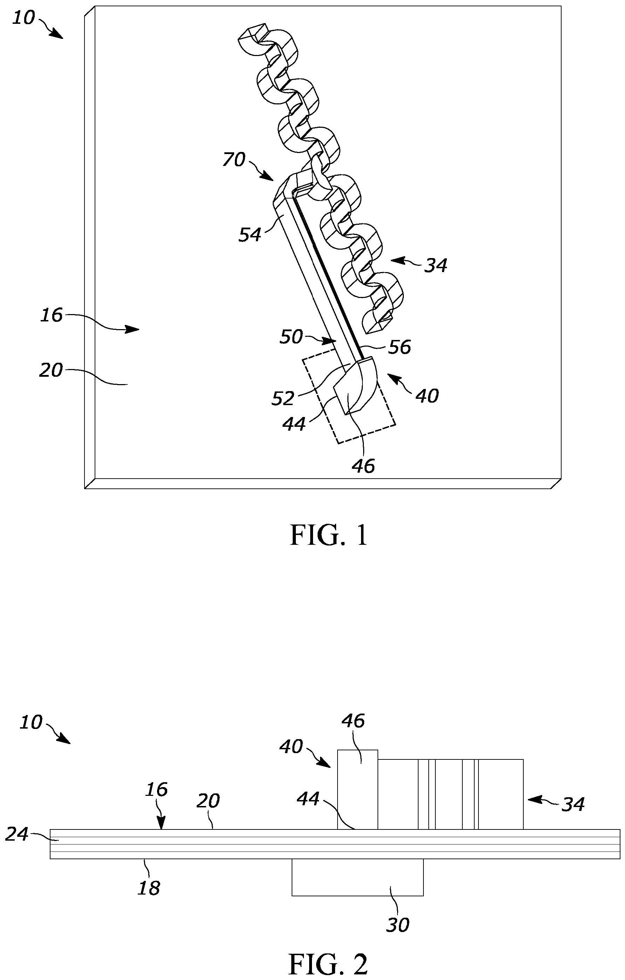

An automotive radar system, in accordance with the present disclosure, is indicated generally at 10 in FIGS. 1 and 2. Radar system 10 includes a printed circuit board (PCB) 16 including a first side 18, a second side 20, and a plurality of intermediate layers 24. In accordance with the disclosure, a monolithic microwave integrated circuit (MMIC) 30 is mounted to first side 18. A radar control module 34 is mounted to second side 20. A half-mode waveguide system 40 is connected between MMIC 30 and radar control module 34. Half-mode waveguide system 40 directs RF energy from MMIC 30 to radar control module 34 where it is then transmitted to a target.

In accordance with the disclosure, half-mode waveguide system 40 includes a delivery channel 44 that projects outwardly from PCB 16. Delivery channel 44 is operatively connected with an output (not separately labeled) of MMIC 30. Delivery channel 44 is also operatively coupled to a transition member 46 that includes a 90° bend. Transition member 46 is coupled to a transmission channel 50 that extends across second side 20 of PCB 16. Transmission channel 50 includes a first end 52 connected to transition member 46 and a second end 54. A slotted opening 56 extends along transmission channel 50 between first end 52 and second end 54.

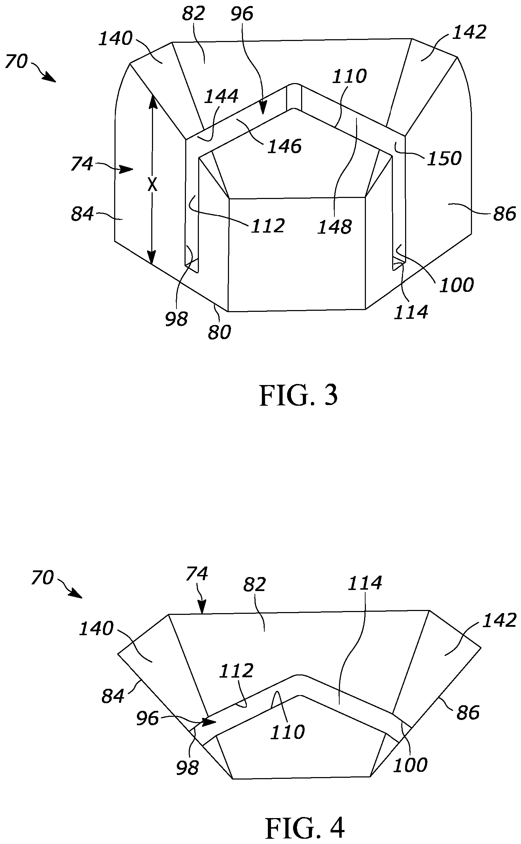

In accordance with the present disclosure illustrated in FIGS 3 and 4, a half-mode waveguide 70 is operatively coupled to transmission channel 50 at second end 54. Half-mode waveguide 70 includes a body 74 formed as a monolithic or one-piece member. Body 74 may be formed using a variety of manufacturing techniques including casting, molding, machining, three-dimensional (3D) printing, as well as through the use of other forming techniques.

In accordance with the present disclosure, body 74 includes a base wall 80, a top wall 82, a first side wall 84, and a second side wall 86. Body 74 also includes additional side walls (not separately labeled). Body 74 includes a height defined along an axis "x" that extends between base wall 80 and top wall 82. A signal channel 96 extends through body 74 between first side wall 84 and second side wall 86. In a non-limiting example, signal channel 96 may have a depth of between about 2mm and about 6 mm.

Signal channel 96 includes an inlet 98 at first side wall 84 and an outlet 100 at second side wall 86. Signal channel 96 forms a 90° bend between inlet 98 at first side wall 84 and outlet 100 at second side wall 86 to deliver RF energy to radar control module 34. In accordance with the present disclosure, signal channel 96 includes a first side wall portion 110, a second side wall portion 112, and a base wall portion 114. Signal channel 96 is exposed at top wall 82.

First side wall portion 110 includes a first height measured along axis "X" and second side wall portion 112 includes a second height measured along axis "X". The height of second side wall portion 112 is greater than the height of first side wall portion 110. The difference in height leads to a reduction in insertion losses through signal channel 96. That is, by optimizing the height of second side wall portion 112, which forms an outer surface of the 90° bend, insertion losses through signal channel 96 are reduced.

In accordance with an aspect of the present disclosure, the height difference is achieved by angling top wall 82 relative to base wall 80. In a non-limiting example, top wall 82 may have an angle of between about 20° and about 50° relative to base wall 80. In another non-limiting example, top wall 82 may have an angle of between about 25° and about 45° relative to base wall 80. In accordance with yet another non-limiting example, top wall 82 may have an angle of between about 35° and about 45° relative to base wall 80.

The particular angle of top wall 82 relative to base wall 80 may be driven by the operational frequency of RF energy passing through signal channel 96. With this construction, signal channel 96 is defined by walls having asymmetrical heights. That is, the angle of top wall 82 ensures that second side wall portion 112 of signal channel 96 is elevated relative to first side wall portion 110 of signal channel 96. This height difference created by the angle of top wall 82 leads to a reduction in insertion losses through signal channel 96.

With continued reference to FIGS. 3 and 4, the 90° bend of signal channel 96 may be achieved through various constructions. For example, body 74 includes a first chamfered edge 140 between top wall 82 and first side wall 84 and a second chamfered edge 142 between top wall 82 and second side wall 86. First chamfered edge 140 includes a 22.5° angle and second chamfered edge 142 includes a 22.5° angle. First and second chamfered edges 140 and 142 help confine RF energy passing through signal channel 96 to half-mode waveguide 70.

Signal channel 96 includes a first portion 144 that extends from first side wall 84 across first chamfered edge 140, a second portion 146 that extends from first chamfered edge 140 to a mid-point (not separately labeled) of top wall 82, a third portion 148 that extends from the mid-point of top wall 82 to second chamfered edge 142, and a fourth portion 150 that extends through second chamfered edge 142 to second side wall 86. Second portion 146 and third portion 148 meet at a 135° angle. With this construction, signal channel 96 creates a 90° bend through body 74 between inlet 98 at first side wall 84 and outlet 100 at second side wall 86.

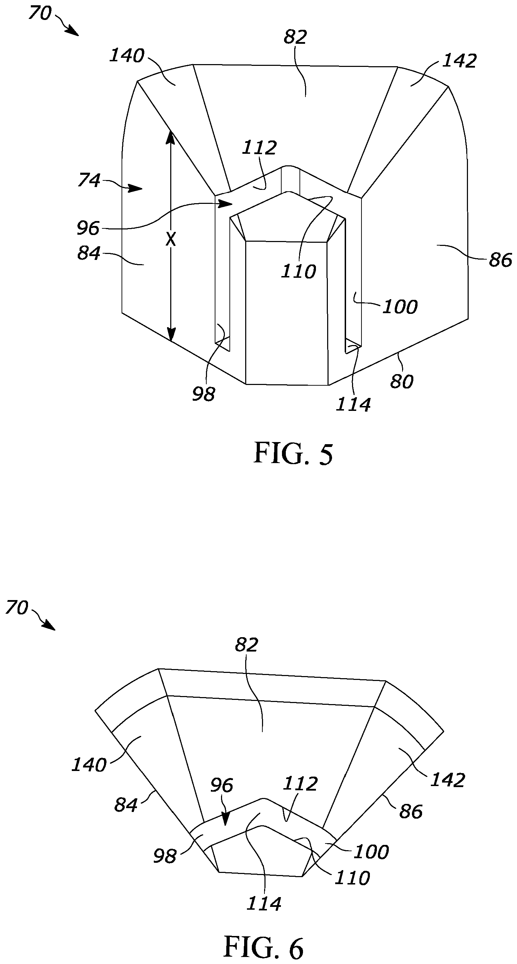

In accordance with the present disclosure, in addition to adjusting the angle of top wall 82 relative to base wall 80 an overall length of signal channel 96 may vary. That is, signal channel 96 may include a first length, such as shown on FIGS. 3 and 4 and a second length, which is shorter than the first length such as shown in FIGS. 5 and 6. The length of signal channel 96 may be adjusted based on operating frequency of automotive radar system 10. Still further, the shape of signal channel 96 may vary. Signal channel 96 in FIGS. 3, 4, 5, and 6 is shown to be formed from connected linear segments.

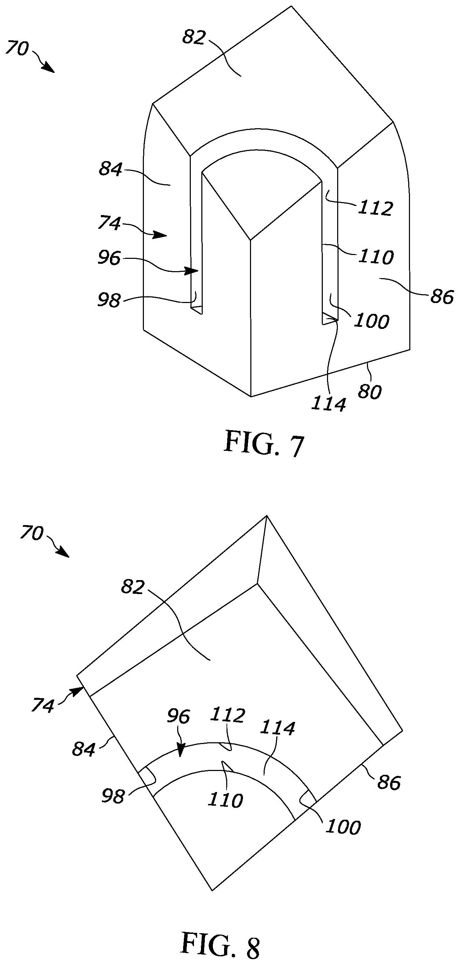

In a manner similar to that discussed herein, FIGS. 7 and 8 depict half-mode wave guide 70 having a height difference between first surface portion 110 and second surface portion 112. The height difference is achieved by angling top wall 82 relative to base wall 80. In a non-limiting example, top wall 82 may have an angle of between about 20° and about 50° relative to base wall 80. In another non-limiting example, top wall 82 may have an angle of between about 25° and about 45° relative to base wall 80. In accordance with yet another non-limiting example, top wall 82 may have an angle of between about 35° and about 45° relative to base wall 80.

In addition to the height asymmetry, signal channel 96 is curvilinear. That is, the 90° bend of signal channel 96 is defined by arc. The arc may have a radius between about 4 mm and about 5 mm. The height asymmetry between first side wall portion 110 and second side wall portion 112 produced by the angle of top wall 82 together with the radius of signal channel 96 reduces insertion losses through half-mode waveguide 70.

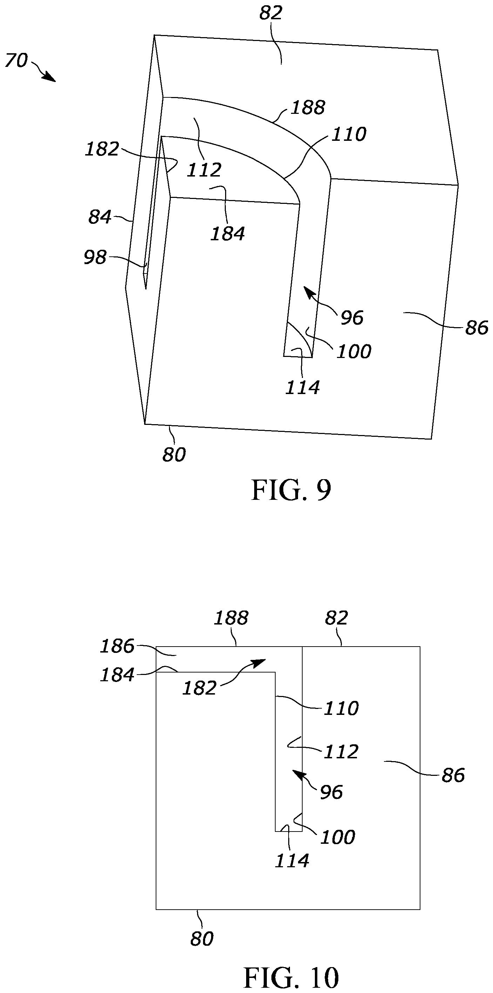

In accordance with another aspect of the present disclosure, in addition to forming signal channel 96 with an arc such as described herein, the height difference between first side wall portion 110 and second side wall portion 112 may be achieved by forming a step 182 in top wall 82 as shown in FIGS. 9 and 10. Step 182 includes a first surface 184 defining the height of first side wall portion 110, a riser 186 that sets the height of second side wall portion 112, and a second surface 188. First surface 184 and second surface 188 collectively form top wall 82. In a manner similar to that described herein, step 182 causes second surface 184 to be raised relative to first surface 182 through second side wall portion 112. In a non-limiting example, second surface 184 is raised between about .5 mm and about 1.5 mm.

The asymmetry created by step 182 leads to a reduction in insertion losses through signal channel 96. That is, by increasing the height of second side wall portion 112, which forms an outer surface of the 90° bend, a height asymmetry between first side wall portion 110 and second side wall portion 112 is created. This height asymmetry causes second surface 188 to be elevated relative to first surface 184. They height asymmetry, taken together with the radius of signal channel 96 reduces insertion losses of RF energy passing through half-mode waveguide 70.

The half-mode wave guide in accordance with the present disclosure includes an asymmetrical signal channel that reduces signal losses passing between an inlet and an outlet. The asymmetrical geometry is created by forming one side wall portion of the channel to have a height that is greater than a height of an opposing side wall portion. The height difference better maintains the RF signal in the signal channel so that losses through open surfaces are reduced. Further, the asymmetrical signal channel forms a 90° bend that allows the half-mode waveguide to form part of a microwave/millimeter-wave transmission line and/or routing application.

The terms "about" and "substantially" are intended to include the degree of error associated with measurement of the particular quantity based upon the equipment available at the time of filing the application. For example, "about" and "substantially" can include a range of ± 8% of a given value.

Example embodiments are provided so that this disclosure will be thorough and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below", or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A half-mode waveguide comprising:
a body having a base wall, a top wall, a first side wall, and a second side wall, the body having a height defined between the base wall and the top wall; and
a signal channel extending through the body from the first side wall to the second side wall, the signal channel including a first side wall portion, a second side wall portion, and a base wall portion, the first side wall portion having a first height and the second side wall portion having a second height that is greater than the first height of the first side wall portion.

2. The half-mode waveguide according to claim 1, wherein the top wall extends at a non-zero angle relative to the base wall.

3. The half-mode waveguide according to claim 2, wherein the non-zero angle is between about 20° and about 50°.

4. The half-mode waveguide according to claim 3, wherein the non-zero angle is between about 25° and about 45°.

5. The half-mode waveguide according to claim 3, wherein the non-zero angle is between about 35° and about 45°.

6. The half-mode waveguide according to any one of the preceding claims, wherein the top wall includes a first chamfered edge extending along the first side wall and a second chamfered edge extending along the second side wall.

7. The half-mode waveguide according to any one of the preceding claims, wherein the signal channel includes a first substantially linear portion extending from the first side wall and a second substantially linear portion extending from the second side wall, the first substantially linear portion joining with the second substantially linear portion at a non-zero angle.

8. The half-mode waveguide according to any one of the preceding claims, wherein the signal channel extends along a curvilinear path between the first side wall and the second side wall.

9. The half-mode waveguide according to any one of the preceding claims, wherein the top wall includes a step at the signal channel, the step defining the second side wall portion.

10. The half-mode waveguide according to any one of the preceding claims, wherein the body is formed as a monolithic structure.

11. The half-mode waveguide according to any one of the preceding claims, wherein the signal channel extends from an inlet defined at the first side wall through the body to an outlet defined at the second side wall.

12. An automotive radar system comprising:
a printed circuit board (PCB) formed from a plurality of layers, the PCB including a first surface and a second surface that is opposite the first surface;
a monolithic microwave integrated circuit (MMIC) mounted to the first surface;
a radar control module mounted to the second surface of the PCB; and
a half-mode waveguide system extending along the second surface of the PCB connecting the MMIC to the radar control module, the half-mode waveguide system including a half-mode waveguide according to any one of the preceding claims.

13. The automotive radar system according to claim 12, wherein the half-mode waveguide defines a 90° bend in the half-mode waveguide system.
